# EUROPEAN PATENT APPLICATION

(11) **EP 1 897 516 A1**
(43) Date of publication of application: **12.03.2008**
(21) Application number: 07113493.6
(22) Date of filing: 31.07.2007
(51) Int. Cl.: A61C 19/00

(54) **Roll holder for surgical packages and dental sealing apparatus therefor**

(30) Priority: 07.09.2006 IT MI20060315 U
(71) Applicant: Euronda S.P.A., 36030 Montecchio Precalcino (VI) (IT)
(72) Inventor: MALPASSI, Paolo, 36100, VICENZA (IT); ONGARO, Daniele, 24020, VILLA DI SERIO (BERGAMO) (IT)
(74) Representative: Faggioni, Carlo Maria

(57) **Abstract**

A roll holder for surgical packages in a web is disclosed, in particular for dental use, of the type comprising a bedplate and a support for one or more rolls of packages in a web, wherein the support is in the shape of one or a pair of extendable uprights, which project substantially vertically, and have one or more pockets for housing the ends of the shafts of said rolls available at different heights on the uprights.

## Description

The present invention concerns a roll holder for surgical packages to be sealed and/or sterilised and the corresponding sealing apparatus for dental use.

As known, in the dental field there is the need to protect over time the sterilised dental tools from environmental contamination. For such purpose, surgical packages of plastic material are used, into which the sterilised or still-to-be-sterilised tool or dental tool can be introduced, which packages are then hermetically sealed by sealing apparatuses.

Sealing apparatuses for surgery use are generally modestly-sized apparatuses (for example 450 x 200 mm) comprising a sealing bar, intended to hot seal the end edges of an aperture of the plastic packages.

The packages can be supplied in flat tubular webs (for example consisting of a paper-based sheet backed by a clear plastic film) wound in rolls or reels of various widths (from 50 mm up to 300 mm).

The rolls of packages are then supported, freely rotatable and in a suitable position, by roll-holders which take up various configurations. According to the prior art, roll holders are typically delivered in one of the following configurations: rear, top and wall fixing.

The rear roll holder is a support integral with the sealing apparatus from the back, which supports the rolls of packages at a suitable height with respect to a resting surface, to allow free rotation of such rolls: the web of packages runs along a substantially horizontal path, from the roll to a slit for introduction of such web into the sealing apparatus. This roll holder is fixed to the back of the sealing apparatus, therefore taking up little space in a vertical direction, even though for installation it normally takes up a great depth of the resting surface.

Conversely, the top roll holder is a support projecting from the base of the apparatus upwards, so as to support the rolls above the sealing apparatus: it hence has a significant bulk in a vertical direction, but this does not affect the depth bulk of the apparatus.

Finally, the roll holder for wall fixing is normally a simple support bar, provided with suitable brackets through which it may be fixed to the wall or to another shelf near the sealing apparatus.

Traditionally, the user purchases the desired support model based on his or her preferences or fixing requirements, and hence has to choose one of the three just described versions.

However, the Applicant has detected that the user (typically a dentist of a dental surgery) is not always happy to have to make a final choice upon purchase (for example because he or she does not have clear ideas on such issue yet), or finds himself/herself in a position needing to subsequently change the version (for example changing from a top-mounted roll holder to a rear-mounted roll holder) following a furniture replacement or having changed the position of the sealing apparatus.

Moreover, it must nevertheless be pointed out that, regardless of the bulk typical of these versions, the user can express a personal preference also with respect to the specific positioning of the reel, above or at the same level as the working surface, due to the different path followed by the web of packaging to the sealing apparatus; as a matter of fact, depending on the type of job or roll, the user may prefer a web which, arriving at the slit for introduction into the sealing apparatus, descends from above or runs horizontally.

At the current status, if the user needs to change the arrangement, he or she has the only option of purchasing a new apparatus; only in the rare cases in which a separate support is available, which may be associated with the sealing apparatus, he or she can decide to purchase a different type of support at a later stage, when the new need arises; however, this choice implies additional costs and, more importantly, does not guarantee the user that over time he or she will still find on the market the roll holder version suitable for his or her sealing apparatus.

Moreover, since these are not widely-used products, supply of these devices implies a few days' waiting and hence calls for a certain organisation on the user's part in order for him or her not to find themselves suddenly unable to adequately seal the packages.

As an alternative, only in case different roll holders are available for the same sealing unit, the user can purchase all the different supports, to be able to employ them depending on his or her requirements: this evidently implies a little-tolerable, significant expense.

Finally, it must be pointed out that it is not possible - with prior-art roll holders - to make multiple rolls or different-size rolls available to the user at the same time beyond the width capacity of the roll holder.

The object of the present invention is hence that of providing a more flexible roll holder and relative sealing apparatus, enabling the user to choose, at any time, the desired roll position/attitude, without forcing him or her to purchase different independent accessories.

A further object of the invention is that of providing such a system, wherein roll supporting opportunities are further extended, also in terms of type, size and number of the same.

Such object is achieved through a roll holder and relative sealing apparatus as described in their essential features in the accompanying main claims.

Other inventive aspects of the roll holder are described in the dependent claims.

Further features and advantages of the system according to the invention will in any case be more evident from the following detailed description, given by way of example and illustrated in the accompanying drawings, wherein:
fig. 1 is a front perspective view of the apparatus according to the invention provided with two rolls;
fig. 2 is a rear side perspective view of the apparatus according to the invention;
fig. 3 is a side elevation view of the apparatus according to the invention with a roll in a lowered position;
fig. 4 is a side elevation view of the apparatus according to the invention with two rolls;
fig. 5 is a front side perspective view of the sole support according to the invention;
fig. 6 is a side elevation view of the support of fig. 5;
figs. 6A and 6B are cut-away section views, according to lines A-A and B-B of fig. 6, respectively;
fig. 7A is an exploded perspective view from the bottom of the system of the invention; and
fig. 7B is a bottom plan view of the system of the invention with a covering plate removed.

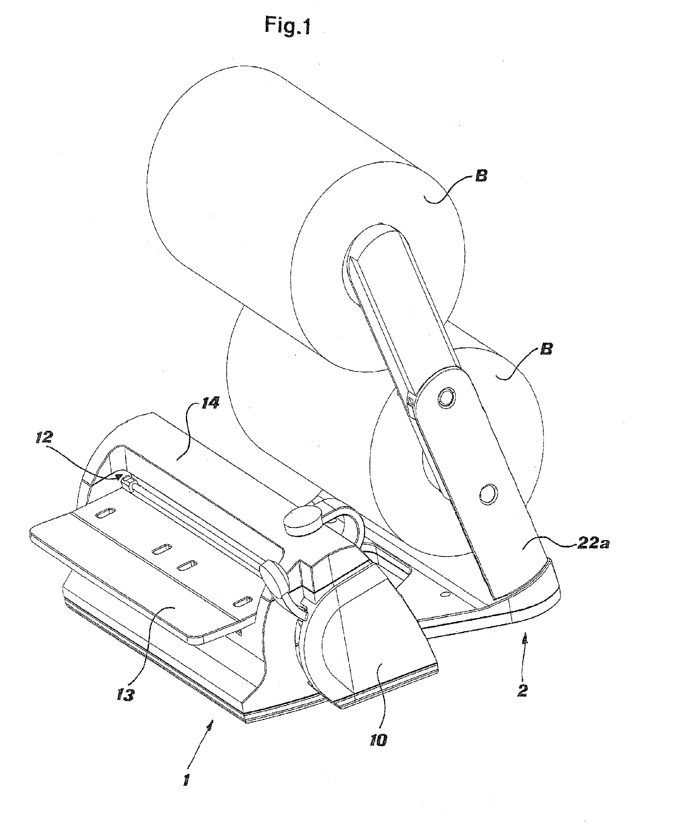

Fig. 1 shows a sealing apparatus comprising a sealing unit 1 and a corresponding roll holder 2.

The sealing unit, in a way known per se, has a bodywork 10 provided with a rear horizontal slit 11 and a front slit 12 which give access to an inner compartment provided with a welding bar and a cutting blade (not shown).

The unit is further provided with suitable actuating levers, one arranged on the front side and intended for lowering the welding blade on the packages, and the other one, projecting from the rear side, intended to slide horizontally to perform a cut on the packages.

In the operation it is provided that a web of surgical packages, coming from a respective roll, passes in the operation area of the welding bar, entering from rear slit 11 and going out forward through front slit 12. The operator can thereby handle the packages as they come along, to introduce therein the various tools/devices to be sterilised and to then seal the open edges of the packages with the welding bar.

For such purpose, at the entry of front slit 12 a cantilevered working surface 13 is further provided.

Above the welding bar there is further provided a cover 14, protecting the bar from accidental contact with the user's hands and joining smoothly with the remaining portion of bodywork 10.

At the end of the welding operation, the cutter is caused to slide through the web of packages by means of the rear lever, so as to separate the sealed package from the remaining web portion.

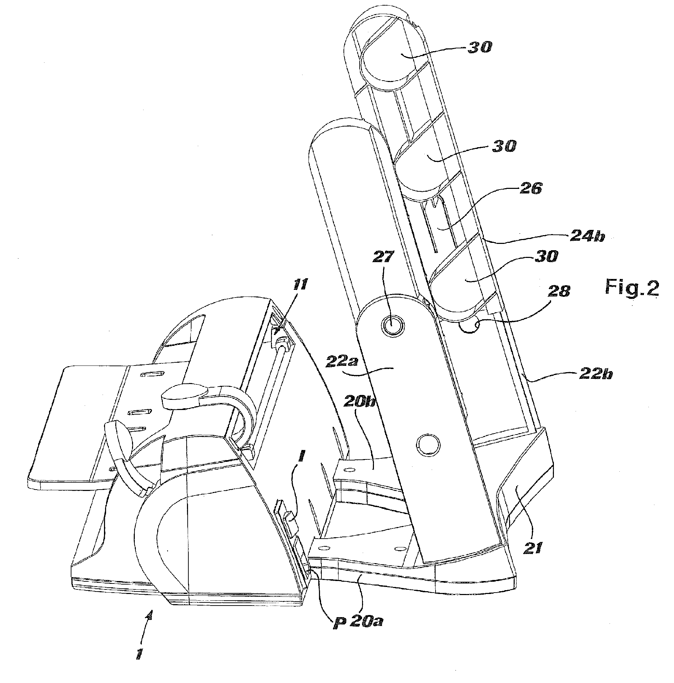

As visible in fig. 2, in the rear part of unit 1 there is also arranged an on/off switch I and a socket P for connection to the power mains.

On the rear, moreover, according to the invention, a pair of connection legs 20a, 20b departs, which legs are part of a bedplate 21 of roll holder 2.

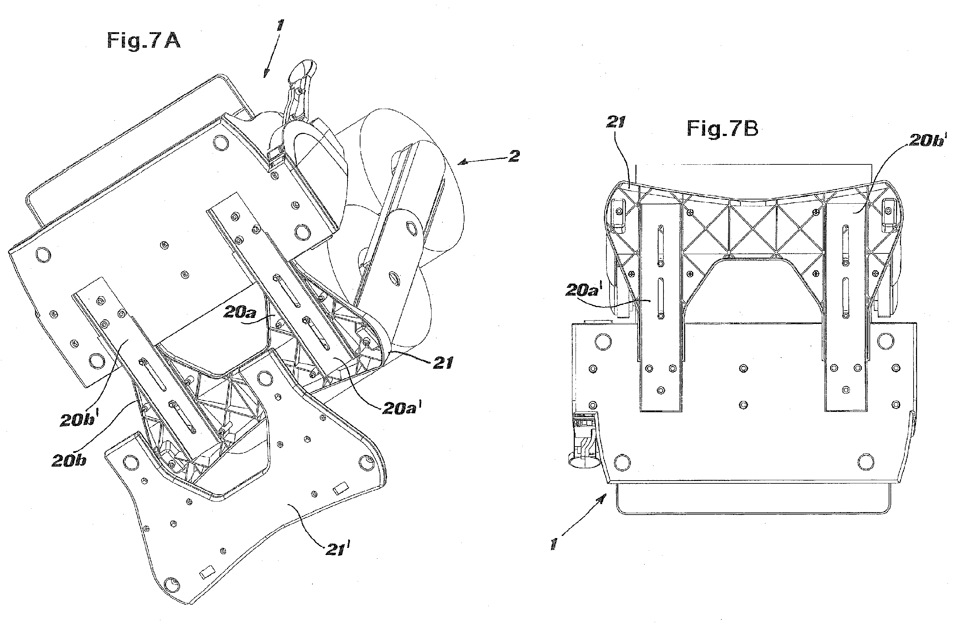

The two legs 20a and 20b consist of support cores, shaped as brackets 20a' and 20b', whereto shells leading up to the bedplate 21 are mounted. Brackets 20a' and 20b' are anchored to the lower bedplate of unit 1 (figs. 7A and 7B) - for example through socket-head screws - and have slots wherein other elements for the anchoring of bedplate 21 are slidable and lockable, such as stud bolts with corresponding nuts. Thereby, the position of bedplate 21 and of the entire roll holder may be adjusted with respect to sealing unit 1, arranging it at the back at the desired distance. Moreover, thanks to this construction, the roll holder may be fully removed from the corresponding sealing apparatus 1 and be used as an independent device, for example in association with a cutter, just to obtain individual packages from a roll of web packages.

The core brackets 20a' and 20b', preferably of a metal material, are arranged so as to remain embedded in the thickness of bedplate 21 and of the shell of corresponding legs 20a and 20b. On the underside of the bedplate 21 there is further provided a covering plate 21' which closes and hides within the underlying part of bedplate 21 and of core brackets 20a' and 20b'.

From bedplate 21 two posts 22a and 22b rise with a certain inclination towards the front of unit 1. The two posts are advantageously identical and hence in the following, for the sake of convenience, reference will be mainly made to one only of the two.

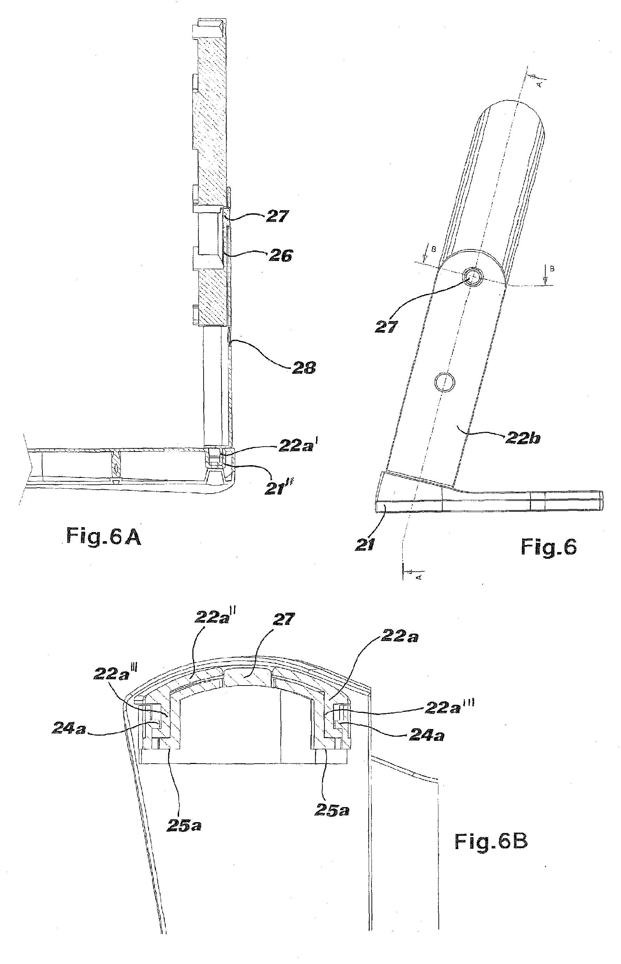

Post 22a (figs. 6-6B) comprises a root portion 22a', intended to snap with a corresponding seat 21" of bedplate 21 (fig. 6), and a main body having a substantially C-shaped cross section (see fig. 6B). The main portion 22a" of the C-shaped section has a smooth, slightly convex, outer surface, which makes up the dorsal finish surface by which the post appears to the user. The two minor side portions 22a'" are mutually parallel and arranged so as to define a sliding guide or rail for a corresponding pair of sliding blocks 24a of an extension arm 23a.

In particular, the guiding portions 22a"' define a longitudinal groove, wherein sliding blocks 24a may be snugly housed, so as to reduce to a minimum the plays, to make stable also the transversal coupling and prevent extension arm 23a from coming off crosswise post 22a.

A similar extension arm 23b is slidingly engaged also with the other post 22b.

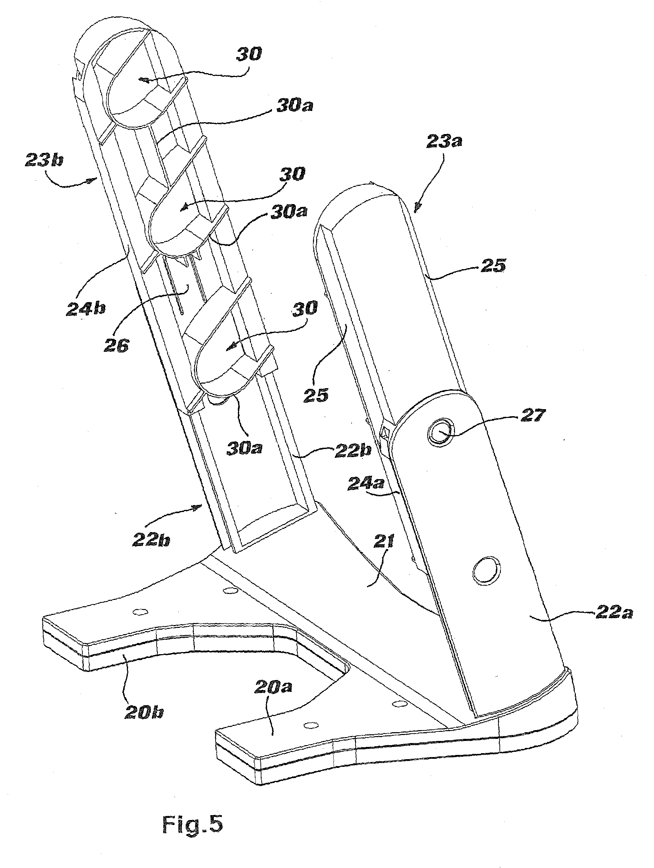

As is well evidenced in fig. 5 and fig. 6B, extension arm 23a has a C-shaped section profile, which corresponds to and matches the ventral inner profile of post 22a, so as to establish an accurate and stable mutual-sliding coupling.

The side edges of the extension arm end with longitudinal strip 25a, belonging to the same plane and intended to slide abutting with the edge of the post guiding portions 22a "'.

The pair of sliding blocks 24a, which engage with guides 22a "', are preferably an extension portion of such strips 25, which fold into the post guiding grooves 22a"', so as to maintain the extension arms attached to the respective posts, without a disengagement in a crosswise direction occurring.

Mutual coupling can hence occur only by slidingly introducing the arm into its post.

Moreover, according to the invention, on the thin wall of the extension arms - in particular in the central area of the C-shaped profile - a flexible flap 26 is provided, ending with an engagement button 27. Flexible flap 26 is obtained by practicing a U-shaped notch on the wall of extension arms 23a and 23b. Engagement button 27 is preferably circular, but may have any other shape.

Accordingly, on the thin wall of each post two holes 28 are provided, aligned along the sliding axis of button 27. Holes 28 are sized so as to snugly house button 27, which is pushed to engage with holes 28 under the elastic bias of flap 26.

The engagement of button 27 with one of holes 28 consolidates longitudinally the extension arm with the respective post, thereby preventing a mutual sliding. Conversely, by a slight pressure on button 27 with the finger of one hand, it is possible to push button 27 backwards, causing flap 26 to flex and disengaging the button from the respective hole 28: thereby freedom to slide of the extension arm on the respective post is established anew, to change the relative position thereof.

According to the invention two holes 28 are preferably provided, a lower one and an upper one in correspondence of the lower and upper end run, respectively, of the arm on its post.

Finally, each of extension arms 23a and 23b has, on the inner ventral side, a series of mutually identical pockets 30 arranged on different levels, for example three pockets spaced apart by about 100 mm in a vertical direction.

These pockets 30 are defined by suitably arranged, thin ribs 30a, and are preferably inclined downwards and to the front side. They have a supporting width - i.e. in a transversal direction to the extension arm - suitable to support the ends of a support rod or shaft (not shown), whereon bobbins or rolls of webs of packages B are supported.

In order to be able to easily introduce and rest the ends of the roll-supporting shaft, pockets 30 are open on the back: the forward inclination thereof, however, prevents the roll-supporting shaft from accidentally coming out thereof, since the weight of rolls B tends to maintain the engagement of the shaft within the pockets.

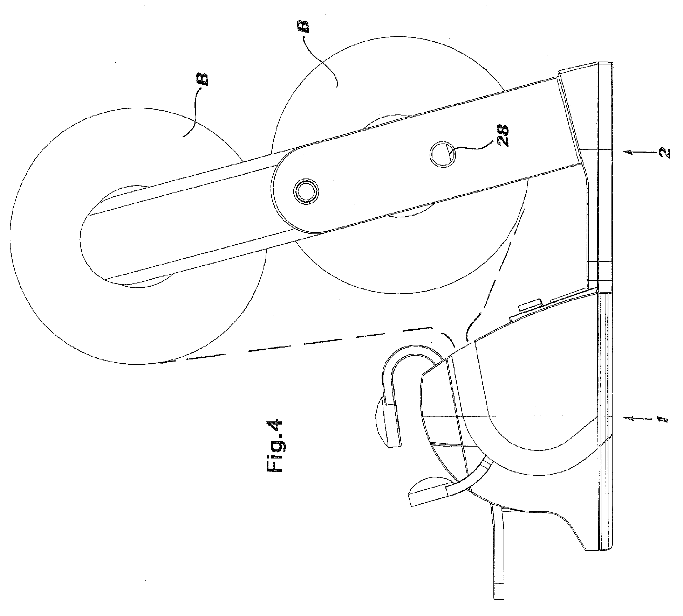

Since each extension arm has a plurality of pockets, in this case three pockets 30, when it is in its fully extended position (fig. 4) it is possible to house on the roll holder more than one roll at a time, for example two large rolls or three small rolls (not shown).

Since the arrangement with two rolls one on top of the other (as in fig. 4) can be particularly advantageous, the length of the extension arms and of the posts, as well as the arrangement of pockets 30 is preferably such that there is sufficient space to house them both: for example the lower pocket is at a height of about 170 mm, while the top pocket is at a height of about 370 mm with respect to the bedplate.

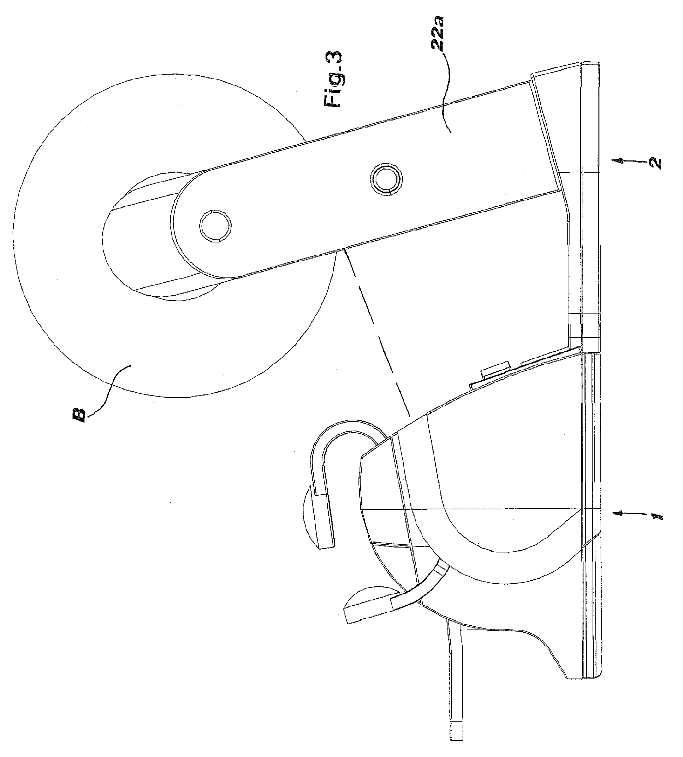

Fig. 3 shows instead the apparatus according to the invention with the extension arms fully lowered, whereon a single roll B is mounted.

The roll holder according to the invention may be manufactured of any suitable material, but it is preferably moulded, in the individual components thereof, of a plastic material such as, for example, glass-filled nylon.

With the system according to the invention, the objects set forth in the preliminary remarks are brilliantly achieved.

In particular, the roll holder according to the invention, when mounted to the sealing unit, allows to house a roll either in a rear or in a top position, fitting the user's preferences, without requiring the purchase of distinct accessories. Moreover, when the extension arms are lowered completely, to house a roll in the rear position, the bulk in a vertical direction advantageously remains extremely small, since extension arms slide into respective posts.

Moreover, due to the arrangement of the roll holder according to the invention - comprising two extendable opposite side supports, projecting forward and provided with a plurality of housing pockets - at least two bobbins may be mounted simultaneously, occupying an area in a horizontal and vertical direction equivalent to that occupied by a known-art roll holder provided with a single roll. For example, the arrangement and the size of connection legs 20a, 20b and of bedplate 21 is such that the maximum overall bulk of the roll holder lies within the lateral dimensions of unit 1, extends at the back by a depth of about 180 mm and to a height of about 470 mm.

Again, the structure consisting of the bedplate and of the two posts, mutually snap fitted, as well as of the extension arms slidingly inserted on the respective posts, does not require special fastening means or additional devices for assembly nor for operation, to the benefit of the overall system economy and of ease of use.

Finally, the presence of connecting brackets 20a' and 20b' makes the roll holder adjustable on the sealing unit and even makes it detachable therefrom, to be able to build an independent, free-standing support which may be coupled with other devices, such as for example a cutter.

However, it is understood that the protection of the invention described above is not limited to the particular arrangement shown, but extends to any other equivalent construction variant, the scope of which is defined by the attached claims.

For example, the shape of the supports and of the pockets may vary, with respect to the exemplary one described and illustrated in the drawings.

Finally, it is not ruled out that, by suitably choosing the materials, it may be possible to accomplish a roll holder provided with a single support post: in such case the roll shaft would be mounted cantilevered in the corresponding post seat.

## Claims

1. Roll holder for surgical packages in a web, in particular for dental use, of the type comprising a bedplate and a support for one or more rolls of packages in a web, **characterised in that** said support is in the shape of one, or a pair of, uprights projecting substantially vertically and having one or more seats for housing the ends of the shafts of said rolls available at different heights on said uprights.

2. Roll holder as claimed in claim 1), wherein said uprights have at least an extendable portion and at least one of said housing seats is arranged on such extendable portion.

3. Roll holder as claimed in claim 2), wherein said uprights comprise a post (22a, 22b) anchored to a bedplate (21) and an extension arm (23a, 23b) slidable with respect to the post and lockable in at least two preset positions.

4. Roll holder as claimed in claim 3), wherein said extension arm (23a, 23b) has elastic means (26, 27) which may snap engage with at least two position seats (28) of said post (22a, 22b), by which engagement said preset positions are determined.

5. Roll holder as claimed in claim 4), wherein said elastic means (26, 27) may be pressure-disengaged from said position seats (28).

6. Roll holder as claimed in claim 4) or 5), wherein said position seats (28) are aligned along the sliding axis of said extension arm (23a, 23b) with respect to the post (22a, 22b).

7. Roll holder as claimed in claim 4), 5) or 6), wherein said elastic means (26, 27) have a raised button (27) and said position seats are holes (28) in the post (22a, 22b) wherein said button (27) is capable of fitting snugly.

8. Roll holder as claimed in claim 7), wherein said elastic means are in the shape of a flexible flap (26) formed in a wall of said extension arm (23a, 23b).

9. Roll holder as claimed in any one of claims 3) to 8), wherein said posts (22) and said extension arms (23) have a generically C-shaped section profile, the two profiles coupling one with the other to establish a sliding guide.

10. Roll holder as claimed in claim 9), wherein said C-shaped profile of the posts (22a, 22b) further has a pair of longitudinal, guiding, side grooves (22a"', 22b"') wherein there are slidable a pair of sliding blocks (24a, 24b) provided along the side edge of the C-shaped profile of the extension arms (23a, 23b).

11. Roll holder as claimed in any one of the preceding claims, wherein said housing seats for the rolls are shaped as pockets (30) defined by thin walls arranged on the ventral, inner side of said uprights, said pockets being open at the back and sloping downwards towards the front side.

12. Roll holder as claimed in any one of the preceding claims, wherein said housing seats (30) are at least two.

13. Roll holder as claimed in any one of claims 3) to 12), wherein said bedplate (21), said posts (22a, 22b) and said extension arms (23a, 23b) are moulded from a plastic material and are mutually snap assembled.

14. Sealing apparatus for sterile packages for dental use, of the type comprising a roll holder (2) integrated in a sealing unit (1), **characterised in that** said roll holder is as in any one of the preceding claims.

15. Sealing apparatus as claimed in claim 14), wherein the uprights of said roll holder project vertically inclined towards the sealing unit (1).

16. Sealing apparatus as claimed in claim 14) or 15), wherein said roll holder has a bedplate (21) which may be consolidated with said sealing unit (1) through connection legs (20a, 20b) which may be coupled at the back of said sealing unit (1) in an adjustable manner.
